# EUROPÄISCHE PATENTSCHRIFT

(11) **EP 1 412 660 B1**
(45) Veröffentlichungstag und Bekanntmachung des Hinweises auf die Patenterteilung: **19.01.2005**
(21) Anmeldenummer: 02791419.1
(22) Anmeldetag: 10.05.2002
(51) Int. Cl.: F16H 61/00, F16H 55/56

(54) **VORRICHTUNG ZUR ANPRESSSTEUERUNG IN EINEM STUFENLOSEN GETRIEBE**
DEVICE FOR CONTROLLING THE CONTACT PRESSURE IN A CONTINUOUSLY VARIABLE TRANSMISSION
DISPOSITIF DE COMMANDE DE PRESSION DANS UNE TRANSMISSION A REGLAGE CONTINU

(30) Priorität: 27.07.2001 DE 10136791
(43) Veröffentlichungstag der Anmeldung: 28.04.2004
(73) Patentinhaber: AUDI AG, 85045 Ingolstadt (DE)
(72) Erfinder: GIELES, Wilhelmus, 85139 Wettstetten (DE)
(86) Internationale Anmeldenummer: PCT/EP2002/005130
(87) Internationale Veröffentlichungsnummer: WO 2003/012318

(56) Entgegenhaltungen:
- DE-A- 4 201 692
- DE-A- 19 545 492
- GB-A- 2 331 791

## Beschreibung

Die Erfindung betrifft eine Vorrichtung zur Anpresssteuerung eines Übertragungsmittels eines stufenlosen Getriebes, gemäß dem Oberbegriff des Patentanspruches 1.

Derartige stufenlose Getriebe sind beispielsweise Toroid-Getriebe oder Zugmittelgetriebe, wobei die Anpressung der Übertragungsmittel - beispielsweise einer Gliederkette oder eines Schubgliederbandes - zumeist drehmomentabhängig gesteuert ist. Damit soll einerseits eine weitgehendst schlupffreie Übertragung des Antriebsmomentes ermöglicht, andererseits jedoch Wirkungsgradverlusten und Verschleiss durch zu starkes Anpressen der Übertragungsmittel entgegengewirkt werden.

Durch die gattungsgemäße DE 195 45 492 A1 ist es auch bekannt, die Anpresssteuerung zusätzlich übersetzungsabhängig zu gestalten, wobei beispielsweise bei einem Zugmittelgetriebe der Anpressdruck auf die Gliederkette bei einem antriebsseitig kleineren wirksamen Umschlingungsradius höher und bei einem größeren antriebsseitigen Umschlingungsradius geringer sein sollte.

Aufgabe der Erfindung ist es, eine Vorrichtung zur Anpresssteuerung eines Übertragungsmittels eines stufenlosen Getriebes aufzuzeigen, die bei einfacher und robuster Konstruktion eine kontinuierliche Anpassung des Anpressdruckes sowohl drehmoment- als auch übersetzungsabhängig realisiert.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Während bei der bekannten Vorrichtung zur Anpresssteuerung (vgl. z. B. Fig. 2 der vorgenannten DE 195 45 492 A1) Wälzelemente bzw. Kugeln verwendet sind, die auf entsprechenden, stirnseitigen Rampen am antreibenden Getriebeelement und am angetriebenen Getriebeelement anlaufen, wird erfindungsgemäß die Verwendung von Hebeln vorgeschlagen, die gemäß den formulierten Merkmalen in den Patentansprüchen in deren wirksamen Längen abhängig von der eingestellten Wegscheibenposition veränderbar sind und die dann über Wälzelemente entweder zusätzlich über Rampen oder aber ohne Rampen unmittelbar das die Anpressung bewirkende Getriebeelement beaufschlagen.

Die Anpresssteuerung kann dabei unmittelbar, also direkt über die Hebel und die Wälzelemente, oder mittelbar durch Drosselsteuerung einer überlagerten hydraulischen Anpressung bewerkstelligt sein.

Hinsichtlich der weiteren Merkmale und Vorteile der Erfindung wird auf die nachfolgende Beschreibung zweier Ausführungsbeispiele verwiesen.

Die anliegende schematische Zeichnung zeigt in
- Fig. 1: einen Ausschnitt aus einem stufenlosen Umschlingungsgetriebe für Kraftfahrzeuge mit dem teilweise im Längsschnitt dargestelltem Antriebsscheibenpaar und einer Vorrichtung zur drehmoment- und übersetzungsabhängigen Anpresssteuerung des Zugmittels;
- Fig. 2: eine Draufsicht auf die Vorrichtung nach Fig. 1 mit geradlinigen Hebeln und Rollen als Wälzelementen;
- Fig. 3: ebenfalls in Draufsicht eine Ausbildung einer weiteren Vorrichtung mit mehrarmigen Hebeln und Kugeln als Wälzelemente;
- Fig. 4: einen Schnitt gemäß Linie IV-IV der Fig. 3 durch die alternative Vorrichtung; und
- Fig. 5: eine Draufsicht in Richtung des Pfeiles X der Fig. 4.

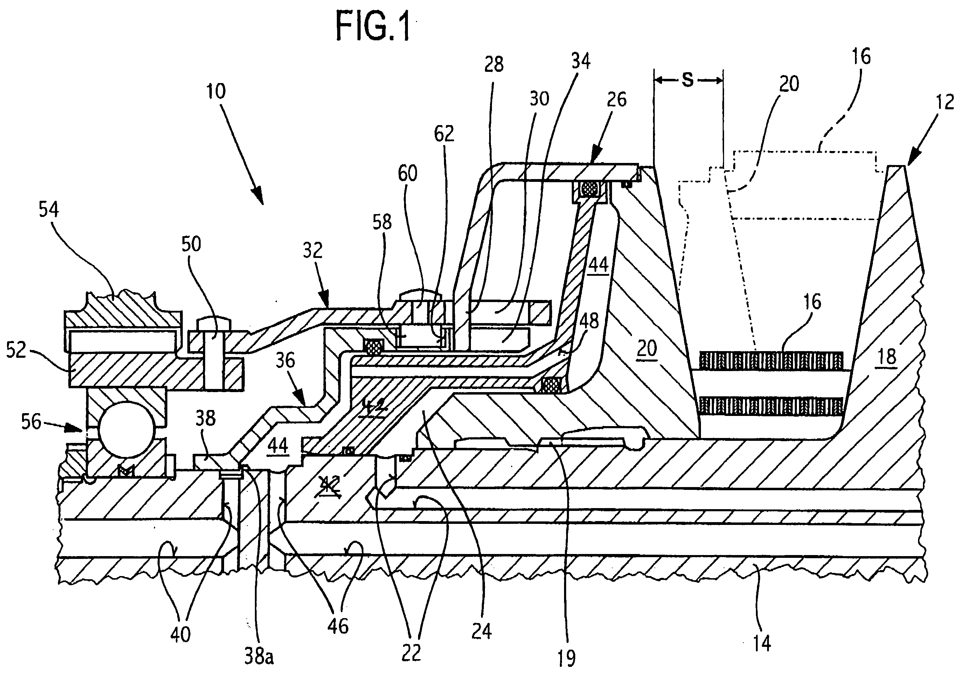

In der Fig. 1 ist ausschnittsweise ein stufenloses Umschlingungsgetriebe 10 soweit nicht beschrieben bekannter Bauart dargestellt; in soweit wird beispielsweise auf die Fig. 1 der DE 195 45 492 A1 verwiesen.

Das Umschlingungsgetriebe 10 weist in bekannter Weise ein Antriebsscheibenpaar 12 auf, dass mit einer Antriebswelle 14 drehbar in einem nicht dargestellten Getriebegehäuse gelagert ist und dass über eine Gliederkette 16 ein Abtriebsscheibenpaar (nicht dargestellt) antreibt.

Das Antriebsscheibenpaar 12 (und selbstverständlich auch das Abtriebsscheibenpaar) weist eine Festscheibe 18 und eine über eine Verzahnung 19 unverdrehbar, jedoch axial verschiebbare Wegscheibe 20 auf; durch hydraulische Verstellung der Wegscheibe 20 relativ zur Festscheibe 18 kann die Gliederkette 16 innerhalb der zwei gezeichneten Endpositionen zur Einstellung eines gewünschten Getriebeübersetzungsverhältnisses stufenlos verstellt werden. Dazu wird unter Druck stehende Hydraulikflüssigkeit von einer nicht dargestellten hydraulischen Steuerung über den Kanal 22 in der Antriebswelle 14 einer ersten Hydraulikkammer 24 zugeführt oder von dieser abgeführt.

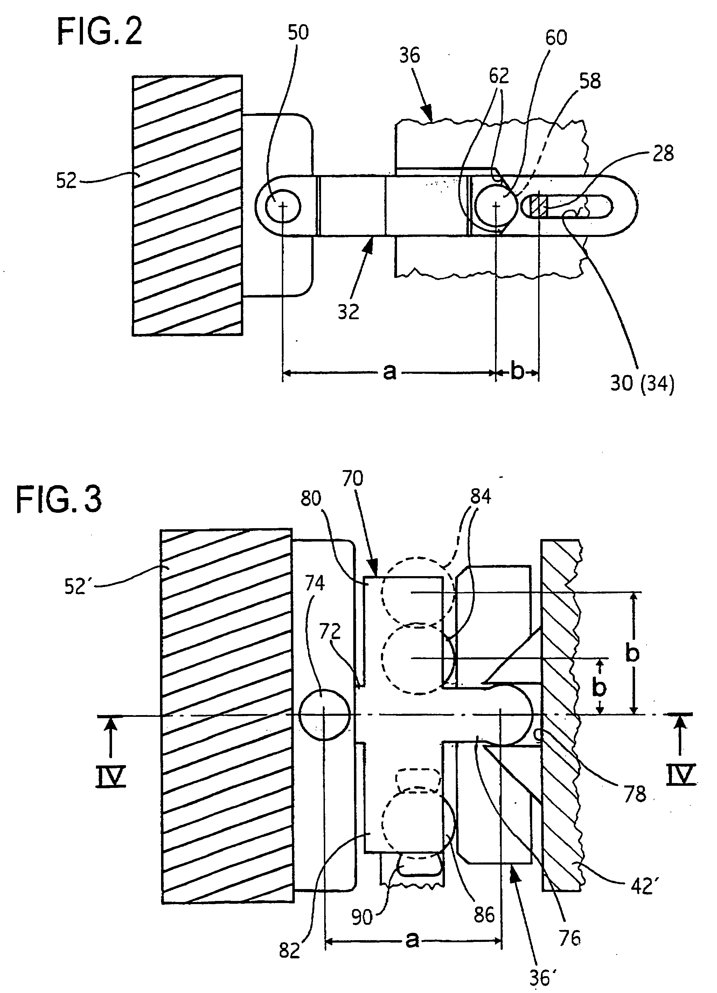

Die Wegscheibe 20 trägt drehfest eine Antriebsglocke 26, die über radial nach innen ragende Mitnehmer 28 axial ausgerichtete Schiebeführungen 30 in geradlinig verlaufenden Hebeln 32 durchstoßen (vgl. auch Fig. 2).

Ferner greifen die Mitnehmer 28 in Längsnuten 34 einer ringförmigen Steuerhülse 36 ein, die auf der Welle 14 mit einem Nabenabschnitt 38 geführt ist, wobei deren Ringkante 38a eine Drossel in Verbindung mit einem Abführkanal 40 für Hydraulikflüssigkeit bildet.

Der durch die Steuerhülse 36 und eine ringförmige, fest auf der Welle 14 gehaltene Zwischenwand 42 begrenzte Hydraulikraum 44 ist über einen ebenfalls mit der hydraulischen Getriebesteuerung verbundenen Kanal 46 in der Welle 14 und einem weiteren Kanal 48 in der Zwischenwand 42 mit Hydraulikflüssigkeit beaufschlagbar, wobei der Druck (= Anpresskraft der Gliederkette 16) unter anderem über die Drossel 38a steuerbar ist.

Es sind sechs umfangsmäßig verteilte Hebel 32 vorgesehen, die jeweils über Bolzen 50 gelenkig mit einem Antriebszahnrad 52 des Umschlingungsgetriebes 10 verbunden sind. Die weiteren antriebsseitigen Getriebeelemente mit einem Zahnrad 54 auf einer weiteren Getriebewelle sind nicht dargestellt. Das Antriebszahnrad 52 ist über ein Wälzlager 56 auf der Getriebewelle 14 drehbar gelagert.

Die Hebel 32 tragen jeweils zwischen der Abstützstelle an den Mitnehmern 28 und der Bolzenverbindung 50 eine Rolle 58, die auf einem Bolzen 60 der Hebel 32 drehbar gelagert ist und mit je einer Rampe 62 zusammenwirkt, wobei die Rampen 62 in die Steuerhülse 36 eingeformt sind. Es ist noch zu erwähnen, dass die Mitnehmer 28 an der Antriebsglocke 26 spielfrei in der Schiebeführung 30 geführt sind und über die Längsnuten 34 die Steuerhülse 36 drehschlüssig halten.

Die Anpresssteuerung der Gliederkette 16 über die Wegscheibe 20 ist wie folgt:

Wird über das Antriebszahnrad 52 ein Antriebsmoment eingeleitet, so überträgt sich dieses über die sechs Hebel 32 (vgl. Fig. 2) und über die Mitnehmer 28 auf die Antriebsglocke 26 und die Wegscheibe 20.

Dabei wird die Steuerhülse 36 durch den Druck der Hydraulikflüssigkeit in dem Hydraulikraum 44 auf der Zeichnung Fig. 1 und 2 nach links vorgespannt, wobei die Rampen 62 gegen die Rollen 58 gepresst werden und damit aufgrund ihrer Konfiguration (Anschrägung) einer Auslenkung der Hebel 32 in beiden Drehrichtungen (= Zug oder Schub) entgegenwirken.

Nimmt das Antriebsmoment zu, so werden die Hebel 32 unter Überwindung der hydraulischen Vorspannkraft ausgelenkt, wobei die Rollen 58 über die Rampen 62 die Steuerhülse 36 auf der Zeichnung Fig. 1 nach rechts verschieben und die Steuerkante 38a den Abführkanal 40 zusteuert bzw. drosselt. Dies führt aufgrund des zugeführten Ölvolumenstromes zu einem Druckanstieg in dem Hydraulikraum 44 und damit verbunden zu einer stärkeren Anpressung der Gliederkette 16 über die Wegscheibe 20.

Da bei einer Übersetzungsänderung des Umschlingungsgetriebes 10 die Wegscheibe 20 bzw. die mit dieser fest verbundene Antriebsglocke 26 axial sich um den Weg s verlagern (vgl. Fig. 1), wandern auch die Mitnehmer 28 relativ zu den Hebeln 32 innerhalb der Langlöcher 30 entsprechend aus. Dies führt zu einer Änderung der Hebelverhältnisse a (unveränderlich) zu b (veränderlich), wobei bei zunehmender Hebellänge b (= Gliederkette 16 außen) offensichtlich ein niedrigerer Anpressdruck eingesteuert wird; der drehmomentabhängige Anpressdruck vermindert sich also kontinuierlich bei nach außen wandernder Gliederkette 16.

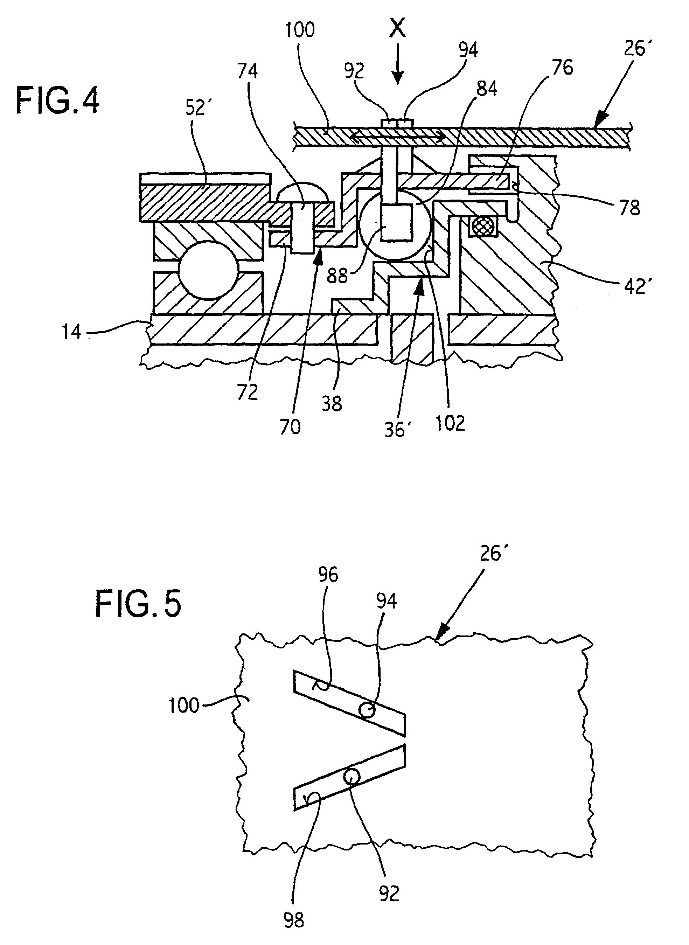

Die Fig. 3 und 4 zeigen ein weiteres Ausführungsbeispiel, das zur Vermeidung von Wiederholungen nur so weit beschrieben ist, als es wesentlich von der Ausführung gemäß den Fig. 1 und 2 abweicht. Gleiche Teile sind mit gleichen Bezugszeichen versehen.

Gemäß den Fig. 3 und 4 sind die drei Hebel 70 kreuzförmig ausgebildet, wobei jeweils der eine Arm 72 mittels eines Bolzens 74 an dem Antriebszahnrad 52' angelenkt ist, der entgegengesetzt abragende Arm 76 in taschenförmige Ausnehmungen 78 der ringförmigen Zwischenwand 42' eingreift und die beiden Querarme 80,82 mit Wälzelementen bzw. Kugeln 84,86 zusammenwirken.

Die Kugeln 84,86 der drei Hebel 70 sind in einander benachbarten, ringförmigen Kugelkäfigen 88,90 geführt, wobei die Kugelkäfige 88,90 radial abragende Mitnehmer 92,94 aufweisen, die in schräg ausgerichteter Führungsschlitze 96,98 eines ringförmigen Fortsatzes 100 an der Antriebsglocke 26' einragen.

Die Führungsschlitze 96,98 je Hebel 70 sind wie aus Fig. 5 ersichtlich konvergierend, so dass bei einer Verschiebung der Wegscheibe 20 mit der Antriebsglocke 26 bzw. 26' die Kugelkäfige 88,90 über die Mitnehmer 92,94 gegeneinander verdreht bzw. die Kugeln 84,86 wie in Fig. 3 anhand der Kugeln 84 dargestellt, aufeinander zu oder voneinander weg verstellt werden und somit die veränderliche Hebellänge b bilden.

Die unveränderliche Hebellänge a ergibt sich aus dem Abstand zwischen der Bolzenverbindung 74 der Arme 72 und dem Angriffspunkt der Arme 76 an den taschenförmigen Ausnehmungen 78 der Zwischenwand 42'.

Die Kugeln 84,86 wiederum wirken auf eine radiale, ringförmige Anlauffläche 102 an der Steuerhülse 36'.

Bei der Übertragung eines Antriebsmomentes vom Antriebszahnrad 52' über die Hebel 70 auf die wellenfeste Zwischenwand 42' werden die Hebel 70 um die Bolzen 74 verschwenkt, wo über die Arme 80,82 (bei Zug- oder Schubbelastung) und die Kugeln 84,86 die Steuerhülse 36' entsprechend verschoben wird. Die Funktion ist dabei wie vorstehend zu den Fig. 1 und 2 beschrieben.

Bei einer Übersetzungsänderung des Umschlingungsgetriebes 10 verschiebt sich die Wegscheibe 20 mit der die Antriebsglocke 26', wobei über die schrägen Führungsschlitze 96,98 und die Mitnehmer 92,94 die Wälzlagerkäfige 88,90 mit den Kugeln 84,86 gegeneinander verdreht werden und die Kugeln 84,86 aufeinander zu oder voneinander weg zur Veränderung der Hebellänge b bewegt werden.

Die Anpresssteuerung über die Steuerhülse 36 bewirken dabei in Antriebsrichtung (Zugbelastung) die Kugeln 84 und bei Schubbelastung die Kugeln 86 (oder umgekehrt).

Werden bei einer axialen Verstellung der Wegscheibe 20 und der Antriebsglocke 26' die Wälzlagerkäfige 88,90 mit den Kugeln 84,86 so verdreht, dass die bei einem Antriebsmoment maßgebliche Kugel (z. B. 84) näher zur Schwenkachse (Bolzen 72) der Hebel 70 verlagert werden, so nimmt durch diese Verkürzung des Hebelarmes b (vgl. Fig. 3) die hydraulische Anpressung der Gliederkette 16 wie vorstehend bereits beschrieben zu. Gleiches gilt bei einer Momenten Umkehrung (Schubbetrieb), wobei dann die Kugeln 86 entsprechend wirken.

## Patentansprüche

1. Vorrichtung zur Anpresssteuerung eines Übertragungsmittels (16) eines stufenlosen Getriebes (10), insbesondere des Zugmittels eines Zugmittelgetriebes für Kraftfahrzeuge, mit einem Antriebsscheibenpaar (12) und einem Abtriebsscheibenpaar, wobei jeweils eine Wegscheibe (20) der Scheibenpaare zur Übersetzungsänderung axial verstellbar ist und wobei in den Antriebszug zumindest einer Wegscheibe ein zweites Übertragungsmittel eingeschaltet ist, das durch drehmomentabhängige Relativbewegung die Anpressung mittelbar oder unmittelbar bewirkt, **dadurch gekennzeichnet, dass** das zweite Übertragungsmittel durch zumindest zwei Hebel (32;70) gebildet sind, die mit einem antreibenden Getriebeelement (52) und mit einem angetriebenen Getriebeelement (20,26;42) verbunden sind und die über jeweils zumindest ein Wälzelement (58;84,86) auf ein axial verschiebbares, die Anpressung mittelbar oder unmittelbar ausübendes Getriebeelement (36) einwirken und dass die für die Anpresskraft wirksame Hebellänge (b) abhängig von der eingestellten Wegscheibenposition veränderlich ist.

2. Vorrichtung nach Anspruch 1, **dadurch gekennzeichnet, dass** die Hebel (32) geradlinig ausgebildet und an dem antreibenden Getriebeelement (52) angelenkt sind, dass die Hebel (32) abtriebsseitig an dem axial verstellbaren, angetriebenen Getriebeelement (26,20) über eine Schiebeführung (30,28) abgestützt sind und dass dazwischen die Wälzelemente (58) angeordnet sind und über korrespondierende Rampen (62) auf das die Anpressung bewirkende Getriebeelement (36) einwirken.

3. Vorrichtung nach Anspruch 2, **dadurch gekennzeichnet, dass** die Wälzelemente als Rollen (58) an den Hebeln (32) drehbar gelagert sind und dass die korrespondierenden Rampen (62) an den die Anpressung bewirkenden Getriebeelement (36) ausgebildet sind.

4. Vorrichtung nach den Ansprüchen 1 bis 3, **dadurch gekennzeichnet, dass** die Hebel (32,70) über Bolzenverbindungen (50,74) an dem antreibenden Getriebeelement (52) schwenkbar angelenkt sind.

5. Vorrichtung nach einem oder mehreren der vorhergehenden Ansprüche, **dadurch gekennzeichnet, dass** die Hebel (70) mit quer dazu abragenden Armen (80,82) über jeweils zwei Wälzelemente (84,86) das die Anpressung bewirkende Getriebeelement (36') beaufschlagen, wobei die Wälzelemente (84,86) abhängig von der Wegscheibenposition in Umfangsrichtung verstellbar sind.

6. Vorrichtung nach Anspruch 5, **dadurch gekennzeichnet, dass** einer der axial verlaufenden Arme (72,76) der Hebel (70) in stirnseitigen Ausnehmungen (78) des angetriebenen Getriebeelementes (42') eingreifen.

7. Vorrichtung nach Anspruch 5 oder 6, **dadurch gekennzeichnet, dass** die Wälzelemente (84,86) in zwei Wälzlagerkäfigen (88,90) gehalten sind und dass die Wälzlagerkäfige (88,90) mit radial abragenden Mitnehmern (92,94) in zur Verstellrichtung des angetriebenen Getriebeelementes (42,20,26') gegenläufig schräg verlaufende Führungsschlitze (96,98) eingreifen.

8. Vorrichtung nach einem der Ansprüche 1 bis 7, **dadurch gekennzeichnet, dass** die Wälzelemente (58;82,84) Kugeln sind.

9. Vorrichtung nach einem der Ansprüche 1 bis 8, **dadurch gekennzeichnet, dass** das die Anpressung bewirkende Getriebeelement (36') verdrehbar und axial verschiebbar auf der Getriebewelle (14) gelagert ist.

10. Vorrichtung nach einem der Ansprüche 1 bis 9, **dadurch gekennzeichnet, dass** bei einem Zugmittelgetriebe (10) das antreibende Getriebeelement ein Zahnrad (52) ist, dass auf der korrespondierenden Getriebewelle (14) verdrehbar gelagert ist und dass das angetriebene Getriebeelement eine axial verstellbare Wegscheibe (20) eines der Scheibenpaare (12) ist.

11. Vorrichtung nach Anspruch 10, **dadurch gekennzeichnet, dass** das die Anpressung des Zugmittels (16) bewirkende Getriebeelement eine ringförmige Steuerhülse (36) ist, die mit einer Steuerkante (38a) bei einer axialen Verschiebung auf der Getriebewelle (14) eine hydraulische Beaufschlagung der Wegscheibe (20) steuert.

## Claims

1. Device for controlling the contact pressure on a transmission means (16) of a continuously variable transmission (10), in particular on the traction means of a traction-type transmission for motor vehicles, comprising a pair of drive sheaves (12) and a pair of driven sheaves, an adjustable sheave (20) of each pair of sheaves being axially adjustable to change the transmission ratio and a second transmission means which directly or indirectly effects the contact pressure through torque-dependent relative movement being included in the drive-train of at least one adjustable sheave, **characterised in that** the second transmission means is formed by at least two levers (32; 70) which are connected to a driving transmission element (52) and to a driven transmission element (20, 26; 42) and which act via at least one rolling element (58; 84, 86) in each case on an axially displaceable transmission element (36) which directly or indirectly exerts the contact pressure, and **in that** the lever length (b) effective for the contact pressure is variable in dependence on the set position of the adjustable sheaves.

2. Device according to claim 1, **characterised in that** the levers (32) have a rectilinear configuration and are articulated to the driving transmission element (52), **in that** the levers (32) are supported on the output side on the axially adjustable, driven transmission element (26, 20) via a sliding guide (30, 28) and **in that** the rolling elements (58) are arranged therebetween and act via corresponding ramps (62) on the transmission element (36) which effects the contact pressure.

3. Device according to claim 2, **characterised in that** the rolling elements are mounted rotatably on the levers (32) as rollers (58) and **in that** the corresponding ramps (62) are formed on the transmission element (36) which effects the contact pressure.

4. Device according to claims 1 to 3, **characterised in that** the levers (32, 70) are pivoted to the driving transmission element (52) via pin connections (50, 74).

5. Device according to one or more of the preceding claims, **characterised in that** the levers (70) apply a load to the transmission element (36') which effects the contact pressure by means of arms (80, 82) projecting transversely to said levers (70) via two rolling elements (84, 86) in each case, the rolling elements (84, 86) being adjustable in dependence on the position of the adjustable sheaves in the circumferential direction.

6. Device according to claim 5, **characterised in that** one of the axially disposed arms (72, 76) of each lever (70) engages in a recess (78) in the end face of the driven transmission element (42').

7. Device according to claim 5 or 6, **characterised in that** the rolling elements (84, 86) are retained in two rolling bearing cages (88, 90) and **in that** the rolling bearing cages (88, 90) engage by means of radially projecting dogs (92, 94) in guide slots (96, 98) disposed obliquely in opposed orientations with respect to the adjustment direction of the driven transmission element (42, 20, 26').

8. Device according to any one of claims 1 to 7, **characterised in that** the rolling elements (58; 82, 84) are spheres.

9. Device according to any one of claims 1 to 8, **characterised in that** the transmission element (36') which effects the contact pressure is mounted rotatably and axially displaceably on the transmission shaft (14).

10. Device according to any one of claims 1 to 9, **characterised in that** in the case of a traction-type transmission (10) the driving transmission element is a gear wheel (52) which is mounted rotatably on the corresponding transmission shaft (14), and **in that** the driven transmission element is an axially adjustable sheave (20) of a pair of sheaves (12).

11. Device according to claim 10, **characterised in that** the transmission element effecting the contact pressure on the traction means (16) is an annular control sleeve (36) which controls the hydraulic application of a load to the adjustable sheave (20) by means of a control edge (38a) when axially displaced on the transmission shaft (14).

## Revendications

1. Dispositif servant à commander la pression de contact d'un moyen de transmission (16) faisant partie d'une boîte de vitesses à réglage continu (10), notamment du moyen de traction d'une boîte de vitesses à moyen de traction pour véhicules automobiles, comportant une paire de disques menants (12) et une paire de disques menés, un disque mobile (20) des paires de disques étant à chaque fois déplaçable axialement pour changer la démultiplication, et un deuxième moyen de transmission qui exerce directement ou indirectement la pression de contact par un mouvement relatif fonction du moment de couple étant engagé dans le train menant d'au moins un disque mobile, **caractérisé en ce que** le deuxième moyen de transmission est constitué d'au moins deux leviers (32 ; 70) qui sont reliés à un élément de boîte de vitesses menant (52) et à un élément de boîte de vitesses mené (20, 26 ; 42) et qui agissent, chaque fois par l'intermédiaire d'au moins un élément roulant (58 ; 84, 86), sur un élément de boîte de vitesses (36) axialement mobile exerçant directement ou indirectement la pression de contact, et **en ce que** la longueur de levier (b) efficace pour la force de pression de contact est variable en fonction de la position réglée du disque mobile.

2. Dispositif selon la revendication 1, **caractérisé en ce que** les leviers (32) sont rectilignes et s'articulent sur l'élément de boîte de vitesses menant (52), **en ce que** les leviers (32) prennent appui, côté mené, contre l'élément de boîte de vitesses (26, 20) mené et axialement déplaçable par l'intermédiaire d'un guide à coulisse (30, 28), et **en ce que** les éléments roulants (58) sont disposés entre les deux et agissent, par l'intermédiaire de rampes correspondantes (62), sur l'élément de boîte de vitesses (36) exerçant la pression de contact.

3. Dispositif selon la revendication 2, **caractérisé en ce que** les éléments roulants sont montés mobiles en rotation sur les leviers (32) sous forme de rouleaux (58), et **en ce que** les rampes correspondantes (62) sont réalisées sur l'élément de boîte de vitesses (36) exerçant la pression de contact.

4. Dispositif selon les revendications 1 à 3, **caractérisé en ce que** les leviers (32, 70) s'articulent de manière oscillante sur l'élément de boîte de vitesses menant (52) par l'intermédiaire de boulons (50, 74).

5. Dispositif selon une ou plusieurs des revendications précédentes, **caractérisé en ce que** les leviers (70) comportant des branches transversales saillantes (80, 82) sollicitent, chaque fois par l'intermédiaire de deux éléments roulants (84, 86), l'élément de boîte de vitesses (36') exerçant la pression de contact, les éléments roulants (84, 86) étant déplaçables dans la direction périphérique en fonction de la position du disque mobile.

6. Dispositif selon la revendication 5, **caractérisé en ce que** l'une des branches axiales (72, 76) des leviers (70) pénètre dans des évidements frontaux (78) de l'élément de boîte de vitesses mené (42').

7. Dispositif selon la revendication 5 ou 6, **caractérisé en ce que** les éléments roulants (84, 86) sont maintenus dans deux cages de palier à roulements (88, 90), et **en ce que** les cages de palier à roulements (88, 90) pénètrent, par des entraîneurs faisant saillie radialement (92, 94), dans des rainures de guidage (96, 98) s'étendant obliquement en sens opposé à la direction de déplacement de l'élément de boîte de vitesses mené (42, 20, 26').

8. Dispositif selon l'une des revendications 1 à 7, **caractérisé en ce que** les éléments roulants (58 ; 82, 84) sont des billes.

9. Dispositif selon l'une des revendications 1 à 8, **caractérisé en ce que** l'élément de boîte de vitesses (36') exerçant la pression de contact est monté en rotation et de manière axialement mobile sur l'arbre de transmission (14) .

10. Dispositif selon l'une des revendications 1 à 9, **caractérisé en ce que**, dans une boîte de vitesses à moyen de traction (10), l'élément de boîte de vitesses menant est une roue dentée (52) qui est montée sur l'arbre de transmission correspondant (14) de manière rotative et **en ce que** l'élément de boîte de vitesses mené est un disque mobile axialement déplaçable (20) d'une des paires de disques (12).

11. Dispositif selon la revendication 10, **caractérisé en ce que** l'élément de boîte de vitesses (16) exerçant la pression de contact sur le moyen de traction est un manchon de commande annulaire (36) qui commande une alimentation hydraulique du disque mobile (20) à l'aide d'un bord de commande (38a) lors d'un déplacement axial sur l'arbre de transmission (14).
